# EUROPÄISCHE PATENTSCHRIFT

(11) **EP 2 289 232 B1**
(45) Veröffentlichungstag und Bekanntmachung des Hinweises auf die Patenterteilung: **28.01.2015**
(21) Anmeldenummer: 09761407.7
(22) Anmeldetag: 30.05.2009
(51) Int. Cl.: H04M 1/725, B60R 11/02

(54) **KRAFTFAHRZEUG MIT FREISPRECHEINRICHTUNG**
MOTOR VEHICLE HAVING A HANDS-FREE DEVICE
VÉHICULE À MOTEUR À KIT MAINS LIBRES

(30) Priorität: 14.06.2008 DE 102008028451
(43) Veröffentlichungstag der Anmeldung: 02.03.2011
(73) Patentinhaber: Bayerische Motoren Werke Aktiengesellschaft, 80809 München (DE)
(72) Erfinder: SYKORA, Thomas, 81247 Muenchen (DE)
(74) Vertreter: Mayer-Martin, Christian
(86) Internationale Anmeldenummer: PCT/EP2009/003898
(87) Internationale Veröffentlichungsnummer: WO 2009/149844

(56) Entgegenhaltungen:
- EP-A- 1 058 220
- EP-A- 1 156 645
- EP-A- 1 737 135
- DE-A1-102005 030 458
- US-A1- 2008 085 689

## Beschreibung

Die Erfindung betrifft ein Kraftfahrzeug.

Die weiter rasante Verbreitung der Mobilfunktechnik führte in den letzten Jahren unter anderem zur Entwicklung und Bereitstellung von Kraftfahrzeugfreisprecheinrichtungen, welche mit Mobiltelefonen zusammenwirken. Als besonders fortgeschritten gelten dabei Kraftfahrzeugfreisprecheinrichtungen, welche schnurlos, insbesondere basierend auf dem so genannten Bluetooth-Standard, mit einem Mobiltelefon, das sich insbesondere im Fahrzeug oder in der Nähe des Fahrzeuges befindet, zusammenwirken oder kommunizieren.

In EP 1 156 645 wird eine solche Einrichtung offenbar.

Dazu ist es bekannt, dass eine Kraftfahrzeugfreisprecheinrichtung automatisch eine Bluetooth-Verbindung zu einem der Kraftfahrzeugfreisprecheinrichtung zugeordneten Mobiltelefon aufbaut oder umgekehrt, sobald sich das Mobiltelefon in der Reichweite der Kraftfahrzeugfreisprecheinrichtung befindet oder umgekehrt. Über die Bluetooth-Verbindung können dann das Mobiltelefon und die Kraftfahrzeugfreisprecheinrichtung Daten austauschen. Durch den Austausch von Sprachdaten kann die Sprachkommunikation basierend auf der Kraftfahrzeugfreisprecheinrichtung und dem Mobiltelefon über ein Mobilfunksystem realisiert werden. Durch den Austausch von Steuerdaten kann die Steuerung des Mobiltelefons durch eine Benutzerschnittstelle eines Kraftfahrzeuges realisiert werden.

Findet dieser Aufbau einer Bluetooth-Verbindung während eines laufenden Telefongesprächs am Mobiltelefon statt, so ergibt sich oft eine lange Unterbrechung zwischen dem Umschalten des auszugebenden Telefon-Audiosignals von dem Lautsprecher des Mobiltelefons auf die Kraftfahrzeugfreisprecheinrichtung und der Ausgabe des Telefon-Audiosignals an einem Lautsprecher des Kraftfahrzeuges, insbesondere der Kraftfahrzeugfreisprecheinrichtung.

Der Erfindung liegt nun die Aufgabe zu Grunde, eine technische Lehre anzugeben, durch welche die genannte Unterbrechung verkürzt wird.

Diese Aufgabe wird durch die Merkmale des unabhängigen Anspruchs gelöst. Vorteilhafte Weiterbildungen der Erfindung sind den abhängigen Ansprüchen zu entnehmen.

Aufwändige der Erfindung zu Grunde liegende Untersuchungen ergaben für die Unterbrechung zwischen der Ausgabe des Telefon-Audiosignals am Mobiltelefon und der Ausgabe des Telefon-Audiosignals an einem Lautsprecher des Kraftfahrzeuges folgende Ursache: Nach dem Aktivieren, Einschalten oder Aufwecken der Freisprecheinrichtung und der so genannten Head-Unit des Kraftfahrzeuges wird in der Head-Unit ein Telefonie-Programm, durch das die notwendigen Audiokanäle, insbesondere zu den Kraftfahrzeuglautsprechern, zur Verfügung gestellt werden, gebootet. Noch vor dem Abschluss des Bootvorganges wird durch die Freisprecheinrichtung eine Bluetooth-Verbindung zu dem Mobiltelefon aufgebaut und nach erfolgreichem Aufbau der Bluetooth-Verbindung das Telefon-Audiosignal (oder entsprechende Daten) nicht mehr am Lautsprecher des Mobiltelefons ausgegeben, sondern über die Bluetooth-Verbindung von dem Mobiltelefon an die Freisprecheinrichtung übermittelt. Eine Weiterleitung des Telefon-Audiosignal (oder entsprechender Daten) an die Head-Unit und/oder einen Lautsprecher des Kraftfahrzeuges ist aber noch nicht möglich, da in der Head-Unit das hierzu erforderliche Telefonie-Programm noch nicht fertig gebootet ist. Die bis zum Abschluss des Bootvorganges auf die Freisprecheinrichtung und/oder Head-Unit umgeleiteten Telefon-Audiosignale (oder entsprechender Daten) sind verloren. Ein Nutzer nimmt eine unerwünschte Unterbrechung des Telefongesprächs wahr.

Basierend auf dieser Erkenntnis wird ein Kraftfahrzeug mit einer Steuereinrichtung, beispielsweise einer so genannten Head-Unit, und einer Freisprecheinrichtung, die vorzugsweise mit zumindest einem Mobiltelefon gekoppelt ist (Zugriff des Mobiltelefons auf die Freisprecheinrichtung und/oder Zugriff der Freisprecheinrichtung auf das Mobiltelefon ist zulässig), vorgeschlagen. Die Freisprecheinrichtung weist eine Funk-Schnittstelle (beispielsweise Bluetooth, WLAN, Wireless-USB) auf, um mit einem insbesondere gekoppelten Mobiltelefon Daten auszutauschen. Die Steuereinrichtung ist derart eingerichtet, dass sie nach einer Aktivierung des Kraftfahrzeuges und damit des Steuergerätes und/oder der Freisprecheinrichtung (Klemme ein) gebootet wird, und dass ausgelöst durch den erfolgreichen Abschluss des Bootens der Steuereinrichtung eine Nachricht (Trigger) von der Steuereinrichtung an die Freisprecheinrichtung übermittelt wird. Die Freisprecheinrichtung ist derart eingerichtet, dass erst ausgelöst durch den Empfang der Nachricht durch die Freisprecheinrichtung eine Funk-Verbindung von der Freisprecheinrichtung oder eine mit der Freisprecheinrichtung gekoppelte Übertragungseinrichtung zu einem insbesondere gekoppelten Mobiltelefon aufgebaut wird, insbesondere sofern sich ein gekoppeltes Mobiltelefon in Reichweite der Freisprecheinrichtung befindet.

Die Head-Unit und die Freisprecheinrichtung können als ein gemeinsames Steuergerät mit integrierten Datenübertragungseinrichtungen ausgeführt sein. Das Mobiltelefon kann auch in einem Computer oder einem tragbaren elektrische Gerät integriert sein. Das Booten der Steuereinrichtung kann das Laden eines Computerprogramms, insbesondere eines Betriebsprogramms oder eines Applikationsprogramms, wie eines Telefonie-Programms, oder von Teilen davon, insbesondere in den Prozessor der Steuereinrichtung, umfassen.

Das Telefon-Audiosignal (Audiosignal) des Mobiltelefons wird vorzugsweise nach dem Aufbau der Funk-Verbindung über zumindest einen Lautsprecher des Kraftfahrzeuges ausgegeben. Die Audioausgabe über das Mobiltelefon wird nach dem Aufbau der Funk-Verbindung vorzugsweise deaktiviert.

Durch die Erfindung wird erreicht, dass eine Funk-Verbindung zwischen der Freisprecheinrichtung und dem Mobiltelefon erst dann aufgebaut und zur Übertragung von Telefon-Audiosignalen (oder entsprechender Daten) genützt wird, wenn sichergestellt ist, dass diese Telefon-Audiosignale durch das entsprechende Steuergerät auch geeignet verwertet werden können. Insbesondere werden durch die Erfindung die Telefon-Audiosignale erst dann auf die Freisprecheinrichtung, das Steuergerät, das Kraftfahrzeug oder die Lautsprecher des Kraftfahrzeuges umgeschaltet, wenn das diese Telefon-Audiosignale (oder entsprechende Daten) verwertende Programm, insbesondere Telefonie-Programm, in dem Steuergerät geladen ist.

Im Ergebnis werden durch die Erfindung in der Regel die Telefon-Audiosignale so lange über das Mobiltelefon ausgegeben bis sichergestellt ist, dass sie durch das Kraftfahrzeug, insbesondere die Freisprecheinrichtung, das Steuergerät und die Lautsprecher, geeignet verarbeitet und ausgegeben werden können.

Vorzugsweise ist die Steuereinrichtung und die Freisprecheinrichtung über einen MOST-Bus miteinander verbunden. Alternativ kann ein CAN oder FlexRay-Bus eingesetzt werden.

Vorzugsweise wird nach dem Aufbau der Funk-Verbindung ein Audiosignal (oder entsprechende Daten) des Mikrofons der Freisprecheinrichtung an das Mobiltelefon übermittelt. Die Eingabe über das Mikrofon des Mobiltelefons wird dann deaktiviert.

Im Folgenden wird die Erfindung anhand von Beispielen unter Bezugnahme auf die folgende Figur näher erläutert:

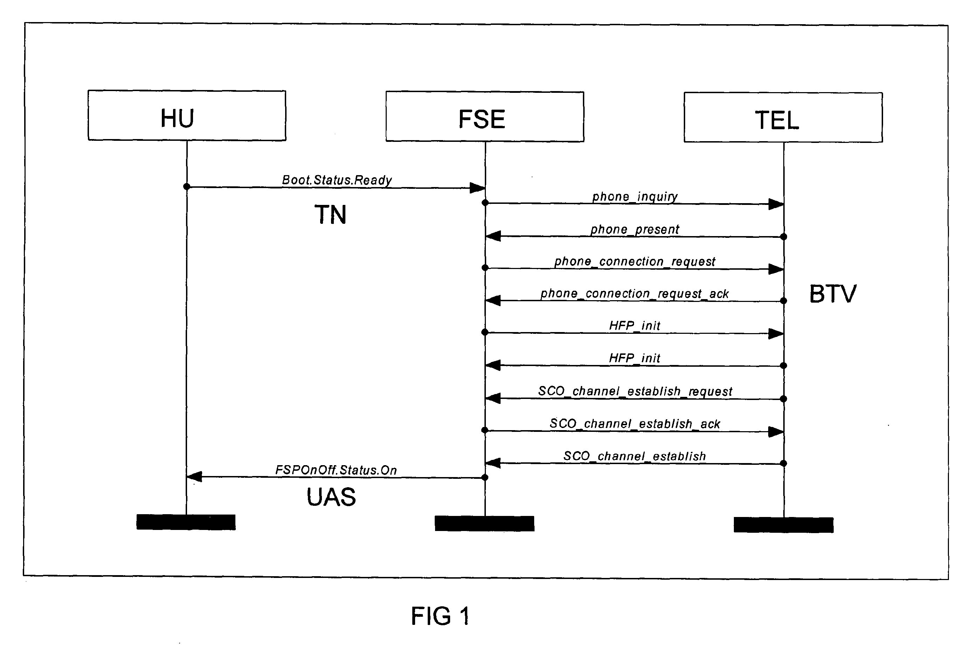

- Figur 1: zeigt ein vereinfachtes Ablaufdiagramm.

Das in Figur 1 dargestellte Diagramm zeigt Schritte einer Übergabe eines Telefongesprächs von einem Mobiltelefon TEL auf eine Kraftfahrzeugfreisprecheinrichtung FSE bzw. ein Steuergerät (Head-Unit) HU des Kraftfahrzeuges.

Es wird in diesem Beispiel davon ausgegangen, dass an einem mit der Freisprecheinrichtung FSE des Kraftfahrzeuges gekoppelten Mobiltelefon TEL ein Telefongespräch beispielsweise über ein GSM-Mobilfunksystem geführt wird.

Sobald das Kraftfahrzeug, die Steuereinrichtung HU und die Kraftfahrzeugfreisprecheinrichtung FSE beispielsweise mittels des Kraftfahrzeugschlüssels geweckt, aktiviert oder eingeschaltet wird, wird die Steuereinrichtung HU gebootet, insbesondere wird eine Telefonieapplikation geladen. Diese kann auch als Audioprogramm bezeichnet werden, da sie die nötigen Audiokanäle zur Verfügung stellt.

Selbst wenn sich das Mobiltelefon TEL schon innerhalb der Reichweite der Freisprecheinrichtung FSE befände und die Freisprecheinrichtung FSE schon in der Lage wäre, eine Bluetooth-Verbindung zu dem Mobiltelefon TEL aufzubauen, wird dieser Aufbau einer Bluetooth-Verbindung zu dem Mobiltelefon solange unterdrückt bis von der Steuereinrichtung HU nach erfolgreichem Abschluss des Bootens, insbesondere des Ladens der Telefonieapplikation, eine Triggernachricht TN von der Steuereinrichtung HU an die Freisprecheinrichtung FSE übermittelt wurde. Erst ausgelöst durch den Empfang dieser Triggernachricht TN wird in der Freisprecheinrichtung FSE der Aufbau BTV einer Bluetooth-Verbindung zu dem Mobiltelefon TEL ausgelöst.

Nach erfolgreichem Aufbau der Bluetooth-Verbindung zu dem Mobiltelefon TEL, wird das Audiosignal (oder entsprechende Daten), das im Rahmen des mittels des Mobiltelefons TEL geführten Telefongesprächs empfangen wird, mittels einer entsprechenden Nachricht UAS von der Ausgabe am Mikrofon des Mobiltelefons TEL auf die Ausgabe an einem Lautsprecher des Kraftfahrzeuges umgeschaltet. Das Audiosignal (oder entsprechende Daten) wird dazu über die Bluetooth-Verbindung von dem Mobiltelefon TEL an die Freisprecheinrichtung FSE, weiter zur Steuereinrichtung HU und weiter zu einem Audioverstärker und einem Lautsprecher übermittelt.

Mit der Umschaltung der Audioausgabe von dem Mobiltelefon auf das Kraftfahrzeug wird auch die Audioeingabe von dem Mobiltelefon auf das Kraftfahrzeug umgeschaltet. Die im Rahmen des Telefongesprächs von dem Mobiltelefon über das Mobilfunksystem übertragenen Audioinformationen basieren dann nicht mehr auf den durch das Mikrofon des Mobiltelefons aufgenommenen Audiosignalen sondern auf den durch das Mikrofon, das mit der Freisprecheinrichtung gekoppelt ist, aufgenommenen Audiosignalen.

Selbstverständlich liegt es im Rahmen der Erfindung, dass vor, während oder nach dem Aufbau der erfindungsgemäßen Funkverbindung, insbesondere Bluetooth-Verbindung, weitere Funkverbindungen zwischen der Freisprecheinrichtung und anderen Mobiltelefonen und/oder zu einem anderen Zweck als der Telefonie, aufgebaut oder genützt werden.

## Patentansprüche

1. Kraftfahrzeug
- mit einer Steuereinrichtung (HU) und
- mit einer Freisprecheinrichtung (FSE),
- bei dem die Freisprecheinrichtung (FSE) eine Funk-Schnittstelle aufweist, um mit einem Mobiltelefon (TEL) Daten auszutauschen,
- bei dem die Steuereinrichtung (HU) nach einer Aktivierung des Kraftfahrzeuges gebootet wird,
- bei dem ausgelöst durch den erfolgreichen Abschluss des Bootens der Steuereinrichtung (HU) eine Nachricht von der Steuereinrichtung (HU) an die Freisprecheinrichtung (FSE) übermittelt wird, und
- bei dem ausgelöst durch den Empfang der Nachricht durch die Freisprecheinrichtung (FSE) eine Funk-Verbindung von der Freisprecheinrichtung (FSE) zu einem Mobiltelefon (TEL) aufgebaut wird.

2. Kraftfahrzeug nach Anspruch 1,
bei dem die Steuereinrichtung (HU) und die Freisprecheinrichtung (FSE) über einen MOST-Bus miteinander verbunden sind.

3. Kraftfahrzeug nach einem der vorhergehenden Ansprüche,
bei dem ein Audiosignal des Mobiltelefons (TEL) nach dem Aufbau der Funk-Verbindung über einen Lautsprecher des Kraftfahrzeuges ausgegeben wird.

4. Kraftfahrzeug nach einem der vorhergehenden Ansprüche,
bei dem nach dem Aufbau der Funk-Verbindung ein Audiosignal des Mikrofons der Freisprecheinrichtung an das Mobiltelefon (TEL) übermittelt wird.

## Claims

1. A motor vehicle
- with a control device (HU) and
- with a hands-free device (FSE),
- wherein the hands-free device (FSE) has a radio interface to exchange data with a mobile telephone (TEL),
- wherein the control device (HU) is booted once the motor vehicle has been activated,
- wherein a message is transmitted from the control device (HU) to the hands-free device (FSE) triggered by the successful completion of booting of the control device (HU), and
- wherein a radio connection from the hands-free device (FSE) to a mobile telephone (TEL) is established triggered by the reception of the message by the hands-free device (FSE).

2. A motor vehicle according to claim 1, wherein the control device (HU) and the hands-free device (FSE) are connected to one another by means of a MOST bus.

3. A motor vehicle according to either of the preceding claims, wherein an audio signal of the mobile telephone (TEL) is emitted by means of a loudspeaker of the motor vehicle once the radio connection has been established.

4. A motor vehicle according to any one of the preceding claims, wherein an audio signal of the microphone of the hands-free device is transmitted to the mobile telephone (TEL) once the radio connection has been established.

## Revendications

1. Véhicule comportant :
un dispositif de commande (HU), et
un kit mains libres (FSE),
dans lequel
le kit mains libres (FSE) comporte une interface radio pour permettre d'échanger des données avec des téléphones mobiles (TEL),
le dispositif de commande (HU) est démarré après une activation du véhicule,
du fait d'un déclenchement par l'achèvement réussi du démarrage du dispositif de commande (HU), un message est transmis du dispositif de commande (HU) au kit mains libres (FSE), et
du fait d'un déclenchement par la réception du message pour le kit mains libres (FSE) une liaison radio du kit mains libres (FSE) avec un téléphone mobile (TEL) est établie.

2. Véhicule conforme à la revendication 1, dans lequel le dispositif de commande (HU) et le kit mains libres (FSE) sont reliés par un bus MOST.

3. Véhicule conforme à l'une des revendications précédentes, dans lequel un signal audio du téléphone mobile (TEL) est délivré après l'établissement de la liaison radio par un haut parleur du véhicule.

4. Véhicule conforme à l'une des revendications précédentes, dans lequel, après l'établissement de la liaison radio un signal audio du microphone du kit mains libres est transmis au téléphone mobile (TEL).
